# EUROPÄISCHE PATENTSCHRIFT

(11) **EP 1 369 636 B1**
(45) Veröffentlichungstag und Bekanntmachung des Hinweises auf die Patenterteilung: **20.10.2010**
(21) Anmeldenummer: 03007879.4
(22) Anmeldetag: 07.04.2003
(51) Int. Cl.: F16L 47/02

(54) **Elektroschweissmuffe**
Electrofusion fitting
Raccord électrosoudable

(30) Priorität: 06.06.2002 DE 10225370
(43) Veröffentlichungstag der Anmeldung: 10.12.2003
(73) Patentinhaber: Georg Fischer Wavin AG, 4553 Subingen (CH)
(72) Erfinder: Müller, Reinhard, 78224 Singen (DE); Gressmann, Michael, 8222 Beringen (CH); Petry, Dirk, 8245 Feuerthalen (CH)
(74) Vertreter: Weiss, Wolfgang

(56) Entgegenhaltungen:
- EP-A- 0 535 247
- US-A- 3 422 179
- US-B1- 6 375 226

## Beschreibung

Die Erfindung bezieht sich auf eine Elektroschweissmuffe für Rohrleitungsverbindungen aus thermoplastischen Kunststoffen, wobei die Elektroschweissmuffe mittels eines Elektroschweissverfahrens mit einer Rohrleitung L verbindbar ist, wobei die Elektroschweissmuffe zwei einander benachbarte Verbindungsbereiche mit unterschiedlich ausgebildeten Schweisszonen aufweist.

Im Rohrleitungsbau werden vermehrt Rohrleitungen aus thermoplastischen Kunststoffen verwendet. Bei Verzweigungen und bei Kurven mit einem kleinen Radius, sowie bei Durchmesseränderungen werden die Rohrleitungsabschnitte mittels Rohrleitungsbauteile verbunden. Die Verbindung zwischen der Rohrleitung und dem Rohrleitungsbauteil wird häufig mittels einem Elektroschweissverfahren hergestellt. Sowohl für Gas, Wasser, wie auch für Luft, Abwasser und anderen Chemikalien sind Rohrleitungen in einer grossen Auswahl von normierten Leitungsdurchmessern erhältlich. Je grösser der Leitungsdurchmesser, desto grösser auch der Aufwand für die Verbindung der einzelnen Leitungsabschnitte.

Aus der EP 382 971 B1 ist ein elektrisch verschweissbarer Rohrkrümmer bekannt. Zwischen zwei Rohrleitungsenden wird ein Krümmer, der zwischen Eingang und Ausgang des Krümmers einen Winkel von 45° einschliesst, mittels Elektroschweissen eingeschweisst. Die Rohrleitungsenden sind ebenfalls mit einem um 45° gekrümmten Ende versehen. Wenn, anstelle dieser speziell hergestellten Rohrleitungsenden, die im Handel erhältlichen geraden Rohrleitungsenden verwendet werden müssen, sind, um einen Winkel von mehr als 45° zu umfassen, mehrere Krümmer und mehrere Schweissoperationen erforderlich. Wenn statt mehrere Krümmer ein einzelnes Teil hergestellt wird, werden die Investitionen für den Formenbau unverhältnismässig hoch.

Aus der EP 535 247 A1 ist ein Rohrverbindungselement zur Verbindung von verschiedenartige Rohre bekannt. Das Rohrverbindungselement weist einen muffenähnlichen Bereich mit einem grösseren Innendurchmesser auf, der als Elektroschweissbereich ausgebildet ist und einen daran anschliessenden Rohrleitungsbereich mit einem kleineren Innendurchmesser, der mittels einer Stumpfschweissung mit weiteren Rohren verbunden werden kann.

Aus der US 3422179 ist ein Verfahren zur Herstellung von Schweissfittings aus thermoplastischem Kunststoff bekannt. Im Elektroschweissbereich wird die Wicklung bifilar gewickelt angeordnet.

Dockument EP 05 35 247 zeigt eine Elektroschweißmuffe, die mit der Rohrleitung mittels eines Elektroschweissverfahrens verbindbar ist, und wobei die Elektroschweissmuffe asymmetrisch ausgebildet ist.

Ausgehend von diesem Stand der Technik ist es Aufgabe der Erfindung, eine Elektroschweissmuffe anzugeben, die möglichst kostengünstig hergestellt werden kann und die möglichst einfach und mediumsdicht mit bestehenden Rohrleitungen verbunden werden kann.

Diese Aufgabe wird durch die Elektroschweißmuffe nach Anspruch 1 gelost.

Bevorzugte Weiterbildungen der Erfindung ergeben sich aus den abhängigen Ansprüchen.

Es ist von Vorteil, dass in der Rohrleitungsinstallation die Elektroschweissmuffe möglichst wenig Platz beansprucht. Dies wird dadurch erreicht, dass die Elektroschweissmuffe an einem ersten mit dem Rohrleitungsbauteil verbindbaren Verbindungsbereich eine kürzere Schweisszone als an einem zweiten mit der Rohrleitung verbindbaren Verbindungsbereich aufweist. Dies wird auch dadurch erreicht, dass die Elektroschweissmuffe an dem mit dem Rohrleitungsbauteil verbindbaren Verbindungsbereich eine kürzere Kaltzone als an dem mit der Rohrleitung verbindbaren Verbindungsbereich aufweist.

Elektroschweissbare Formstücke werden in der Regel in grossen Stückzahlen industriell gefertigt. Hierzu bietet sich das Spritzgussverfahren als kostengünstiges, gut reproduzierbares und bezüglich Qualität gesichertes Verfahren an. Nachteilig sind einzig die hohen Investitionskosten für die Herstellung der Spritzgussformen. Je grösser die Bauteile, desto grösser und schwerer sind auch die benötigten Formen und Maschinen. Es erklärt sich von selbst, dass das Spritzgussverfahren wirtschaftlich und technisch an Grenzen stösst. Durch die Verwendung der erfindungsgemässen asymmetrischen Elektroschweissmuffe in Kombination mit Standardrohrleitungsbauteilen werden, vor allem bei Rohrleitungsdurchmessern über 110 mm, Kosten für den Bau von Formen für die Spritzgussanlage gespart. Die asymmetrische Elektroschweissmuffe weist eine möglichst kurze Baulänge auf und wird werksseitig mit dem jeweils gewünschten Standardrohrleitungsbauteil verbunden.

Durch den werksseitigen Zusammenbau des Standardrohrleitungsbauteils mit der asymmetrischen Elektroschweissmuffe können die Schweissbedingungen für das Elektroschweissverfahren genauer eingehalten werden. Bei der werksseitigen Herstellung sind keine Sicherheitszuschläge notwendig. Weil werksseitig kleinere Herstellungstoleranzen als beim Endanwender eingehalten werden können, können die Anforderungen, die vom Medium, vom Prozess oder vom Betreiber des Rohrleitungsnetzes gestellt werden, mit kürzeren Baulängen und mit engeren Passungen erfüllt werden.

Ein Ausführungsbeispiel der Erfindung wird anhand der Figuren beschrieben. Es zeigen:
Figur 1 eine Sicht auf ein Rohrleitungsbauteil mit zwei erfindungsgemässen Elektroschweissmuffen,
Figur 2 eine perspektivische Sicht auf eine Elektroschweissmuffe zum Rohrleitungsbauteil von Figur 1,
Figur 3 einen Schnitt durch die Elektroschweissmuffe von Figur 2,
Figur 4 eine vergrösserte Sicht auf einen Teilbereich der Elektroschweissmuffe von Figur 3,
Figur 5 einen Schnitt durch den Teilbereich von Figur 4,
Figur 6 einen weiteren Schnitt durch den Teilbereich von Figur 4, und
Figur 7 ein weiteres Ausführungsbeispiel eines Rohrleitungsbauteils mit der erfindungsgemässen Elektroschweissmuffe.

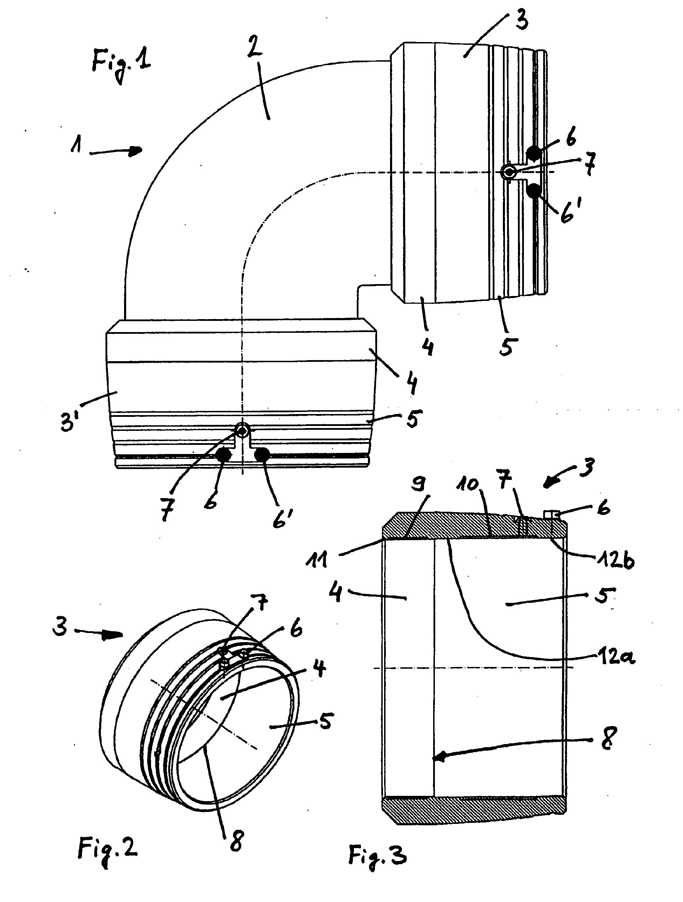

In Figur 1 ist ein Rohrleitungsbauteil 1 bestehend aus einem Standardrohrkrümmer 2 und zwei Elektroschweissmuffen 3, 3' dargestellt. Der in Figur 1 dargestellte Krümmer 2 ermöglicht die Verbindung von zwei geraden Rohrleitungsabschnitten, die unter einem Winkel von 90° zu einander verlaufen. Mit dem Rohrleitungsbauteil 1 können handelsübliche Rohrleitungen verbunden werden. Die einzelnen Rohrleitungsabschnitte brauchen im Wesentlichen keine weitere Vorbehandlung. Lediglich die Stirnseite der Rohrleitungswand sollte rechtwinklig zur Rohrleitungsachse angeschnitten und/oder angeplant werden. Anstelle des Rohrkrümmers mit einem Winkel von 90° können auch andere am Markt erhältliche Rohrleitungsbauteile genommen werden, wie beispielsweise gebogene oder gerade Rohre, Reduktionen, Winkel, Bögen, T-Formstücke oder sogenannte Kreuzfittings.

Die Elektroschweissmuffe 3 weist jeweils zwei Verbindungsbereiche 4,5 auf. Der erste Verbindungsbereich 4, der zur Verbindung mit einem Standardrohrleitungsbauteil 2 im Herstellerwerk dient, ist kürzer als der zweite Verbindungsbereich 5, der vom Anwender auf der Baustelle mit einem hier nicht dargestellten Rohrleitungsabschnitt verbunden werden kann. Der zweite Verbindungsbereich 5 weist, im Gegensatz zum ersten Verbindungsbereich 4, deutlich sichtbare Anschlüsse 6, 6' für den elektrischen Strom auf. Am zweiten Verbindungsbereich 5 ist auch ein Schmelzindikator 7 ersichtlich. Die Elektroschweissmuffe 3,3' ist in Bezug auf der Baulänge und der Ausführung der Verbindungsbereichen 4,5 asymmetrisch ausgebildet.

In Figur 2 ist die asymmetrische Elektroschweissmuffe 3 für sich alleine perspektivisch dargestellt. Auf der Innenseite der Elektroschweissmuffe 3 ist einen Absatz 8 oder einen Anschlag für den am zweiten Verbindungsbereich 5 anzuschliessenden Endabschnitt einer Rohrleitung ersichtlich. Es ist auch ersichtlich, dass die Elektroschweissmuffe 3 aus zwei unterschiedlich langen Verbindungsbereichen 4,5 aufgebaut ist.

In Figur 3 ist die asymmetrische Elektroschweissmuffe 3 geschnitten dargestellt. Benachbart zur Innenwand der Schweissmuffe 3 sind zwei Heizwicklungen 9,10 dargestellt. Im ersten Verbindungsbereich 4 eine erste Heizwicklung 9, die verhältnismässig enger anliegend gewickelt ist, und die keine sichtbaren elektrischen Anschlüssen aufweist, und im zweiten Verbindungsbereich 5 eine zweite Heizwicklung 10, die verhältnismässig breiter gewickelt ist, und die Anschlüsse 6, 6' für den elektrischen Strom aufweist. Auch die sogenannten Kaltzonen 11,12 auf der Innenseite der Muffe 3 sind im zweiten Verbindungsbereich 5 länger als im ersten Verbindungsbereich 4. In Figur 3 weist der erste Verbindungsbereich 4, der im Wesentlichen die erste Heizwicklung 9 und die erste Kaltzone 11 umfasst, eine Länge auf, die etwa 2/7 der Gesamtlänge der Elektroschweissmuffe 3 beträgt. Der zweite Verbindungsbereich 5, der im Wesentlichen die zweite Heizwicklung 10 und die zweite Kaltzone 12 umfasst, ist etwa 2,5 mal so lang als der erste Verbindungsbereich 4. Bei den Kaltzonen 11,12 kann in einer inneren und einer äusseren Kaltzone unterschieden werden. In Figur 3 ist im zweiten Verbindungsbereich 5 eine zweite innere Kaltzone mit 12a und eine zweite äussere Kaltzone mit 12b bezeichnet.

Gegenüber den bisherigen symmetrisch ausgebildeten Elektroschweissmuffen wird also etwa 30% der Baulänge der Schweissmuffe 3 eingespart. Die Längeneinsparung bringt vor allem bei Rohrleitungsdurchmessern über 110 mm eine erhebliche Gewichts- und Materialeinsparung. Die Längeneinsparung wird möglich, weil die Verbindung zwischen dem Standardrohrleitungsbauteil 2 und der asymmetrischen Muffe 3 unmittelbar nach der Herstellung der Spritzgussteilen im Herstellerwerk, und nicht erst von dem Anwender auf der Baustelle hergestellt wird. Unter den Bedingungen, die im Herstellerwerk herrschen, können die Schweissbedingungen, wie das Temperaturprogramm für die Energiezufuhr zur ersten Heizwicklung 9 und das Anpressprogramm für die Positionierung der zu verbindenden Teilen genauer, das heisst mit kleineren Sicherheitszuschlägen und engeren Toleranzfeldern, eingehalten werden. Im Unterschied zu einer Baustellenumgebung könnten im Herstellerwerk spezielle Sicherheitseinrichtungen vorgesehen werden, die es erlauben, die Verbindung auch mit höheren elektrischen Spannungen und mit umfangreicheren, computergesteuerten Positionierungswerkzeugen zu fertigen. Weil im Herstellerwerk die Schweissbedingungen genauer eingehalten und kontrolliert werden können als auf der Baustelle, kann im Herstellerwerk auch bei Dimensionen, die an der unteren Grenze der Toleranzfelder liegen, die Garantie für eine sichere und vorschriftsmässige Verbindung gegeben werden. Mit der Schweissung des ersten Verbindungsbereiches 4 im Herstellerwerk werden Material und Zeit eingespart. Der Endanwender auf der Baustelle erhält mit weniger Zeit- und Arbeitsaufwand eine Verbindung mit einer höheren Sicherheit.

Durch die Aufteilung des Rohrleitungsbauteiles 1 in einem handelsüblichen Standardrohrleitungsbauteil 2 und der asymmetrischen Elektroschweissmuffe 3 werden, vor allem bei grösseren Rohrleitungsdurchmessern Herstellkosten gespart. Die asymmetrische Elektroschweissmuffe 3 ist ein im Wesentlichen zylindrischer Formkörper, der in der Herstellung einfach entformt werden kann. Die Investitionen für die Kunststoffspritzgussformen und für die Kerne werden wirtschaftlich besser ausgenutzt. Der Aufwand für die Entformung von Rohrrohrleitungsbauteile, die eine Richtungsänderung aufweisen, wird geringer. Die Elektroschweissmuffe 3 kann auch mit Rohrleitungsbauteilen, die für andere Verbindungsverfahren angewendet werden, verbunden werden.

Die asymmetrische Elektroschweissmuffe 3 ist auch insofern asymmetrisch ausgebildet , dass die zwei Verbindungsbereiche 4,5 mit zwei unterschiedlichen Verbindungsverfahren verbunden werden. Der zweite Verbindungsbereich 5, der vom Endanwender auf der Baustelle verbunden wird, wird mittels einem Elektroschweissverfahren verbunden. Hierfür sind die passenden Elektroschweissgeräte am Markt erhältlich. Der erste Verbindungsbereich 4, der im Herstellerwerk verbunden wird, wird mittels einem induktiv wirkenden Schweissverfahren verbunden. Induktionsschweissverfahren sind seit längerer Zeit bekannt, kommen jedoch in der Praxis auf der Baustelle nicht zum Einsatz, weil die Vorrichtungen zum Erzeugen des Induktionsfeldes schwer und unhandlich sind. Zudem übersteigen bei grossen Rohrleitungsdurchmessern ab etwa 110 mm die benötigten Leistungen die normalerweise auf einer Baustelle zur Verfügung stehenden Generatorleistungen.

Diese Probleme bestehen bei einer werksseitigen Herstellung der Verbindung im ersten Verbindungsbereich 4 nicht. Für das Induktionsschweissverfahren wird anstelle des Heizleiters 9 aus Kupferdraht oder einer metallischen Legierung, die durch elektrischen Strom erhitzt wird, ein Körper aus einer spezifisch gefertigten Metalllegierung in dem ersten Verbindungsbereich 4 der Muffe eingebaut. Dieser Körper kann durch ein Induktionsfeld erhitzt werden. Erreicht der Körper eine definierte Temperatur, so ändert er seine magnetischen Eigenschaften und kann durch das Induktionsfeld nicht weiter erhitzt werden.

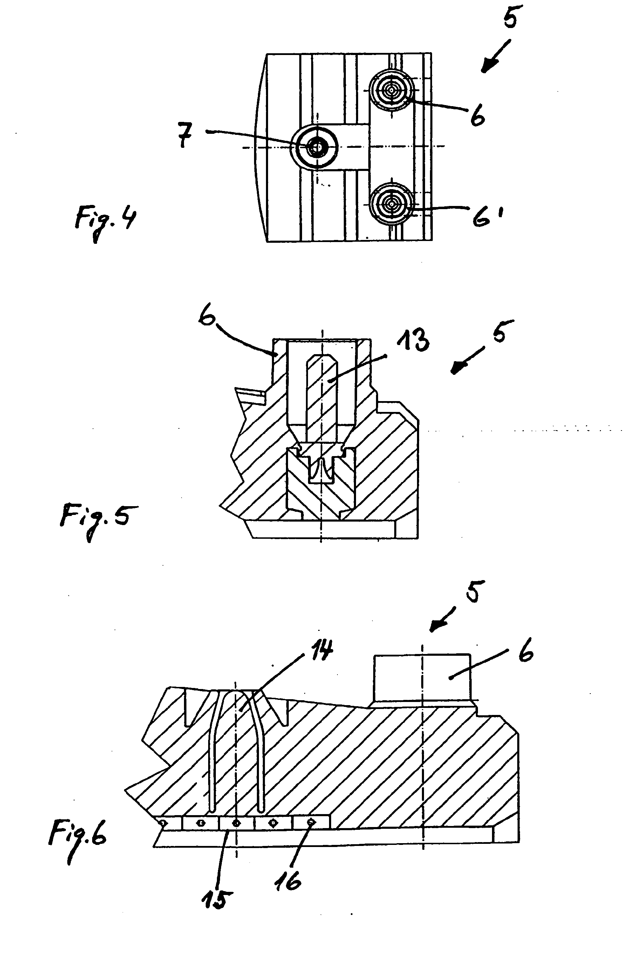

In Figuren 4, 5 und 6 sind Einzelheiten der asymmetrischen Elektroschweissmuffe 3 dargestellt. In Figur 4 ist einen Teilbereich des zweiten Verbindungsbereiches 5 vergrössert dargestellt. Am Aussenumfang des zweiten Verbindungsbereiches 5 sind zwei elektrische Steckverbindungsanordnungen 13 dargestellt. Hier wird auf der Baustelle der elektrische Strom, der für das Elektroschweissverfahren notwendig ist, angeschlossen. Auf der Aussenseite der Elektroschweissmuffe 3 ist auch ein Schmelzindikator 14 ausgebildet. Mit Hilfe des Schmelzindikators 7,14 kann der Anwender auf der Baustelle überwachen, ob der Kunststoff im Schweissbereich zwischen der Elektroschweissmuffe 3 und dem Rohrleitungsabschnitt ausreichend geschmolzen ist.

In der Vergrösserung von Figur 6 ist auch eine Wicklung 15 mit einigen Windungen von einem Widerstandsheizdraht 16 ersichtlich, wobei die Wicklung beispielsweise bifilar gewickelt angeordnet ist. Die Heizwicklungen 9,10 können auch durch gleichzeitige Wicklung von zwei Einzeldrähten 16 in nebeneinander verlaufenden Windungen hergestellt werden, wobei die zwei Einzeldrähte an einem Ende miteinander verbunden werden. Beim ersten kurzen Verbindungsbereich 4 sind keine Steckverbindungsanordnungen 6,13 und keine Schmelzindikatoren 7,14 erforderlich, weil dieser Verbindungsbereich im Herstellerwerk mit einem Standardrohrleitungsbauteil verbunden wird. Im Herstellerwerk sind die Temperatur- und Druckbedingungen in Abhängigkeit der Zeit auf anderer Art, beispielsweise mit einer computergesteuerten Montage, genauer zu überwachen.

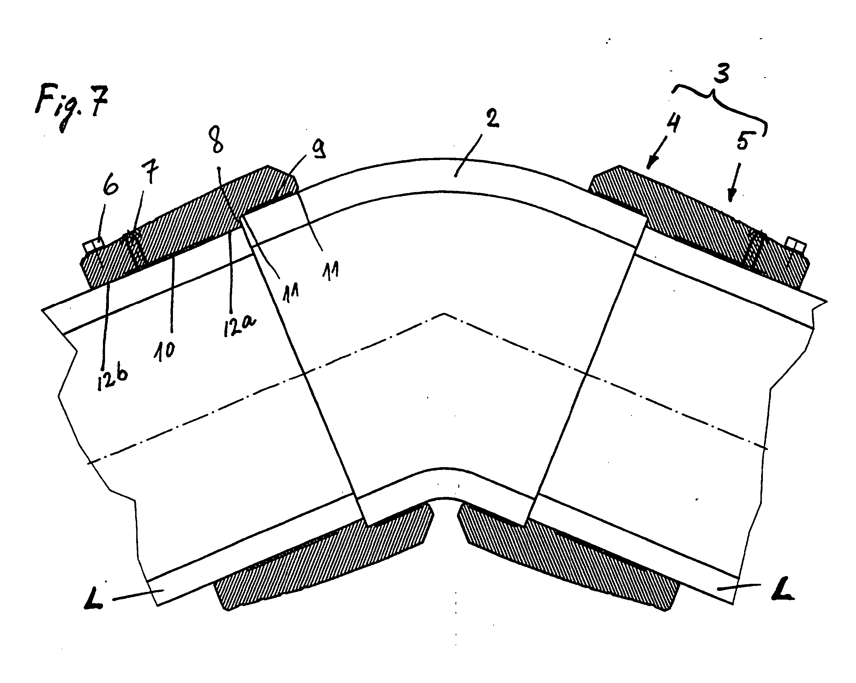

Die asymmetrische Elektroschweissmuffe 3 ist universell einsetzbar. Für die Verbindung von Standardrohrleitungen wird die Elektroschweissmuffe zumindest im zweiten Verbindungsbereich 5 mit einem Durchmesser ausgelegt, der mit dem in den Normen festgelegten Durchmesser der Rohrleitungen übereinstimmt. Die asymmetrische Elektroschweissmuffe 3 kann jedoch auch zur Verbindung von Rohrleitungen und/oder Rohrleitungsbauteile ausgelegt werden, die nicht den üblichen normierten Abmessungen haben. Im Beispiel von Figur 7 ist eine Elektroschweissmuffe 3 dargestellt, die für sogenannte Relining-Aufgaben angewendet werden kann. Bereits verlegte und nachträglich mit einer Innenauskleidung reparierte Rohrleitungen weisen im Bereich der Innenauskleidung nach der Reparatur einen von der Norm abweichenden Aussendurchmesser auf. Mit der asymmetrischen Elektroschweissmuffe 3 kann auch der Übergang von einem Rohrleitungsbauteil mit einem normierten Aussendurchmesser auf einem anderen Bauteil mit einem nicht-normierten Aussendurchmesser hergestellt werden.

## Patentansprüche

1. Elektroschweissmuffe (3,3') für Rohrleitungsverbindungen aus thermoplastischen Kunststoffen, wobei die Elektroschweissmuffe (3,3') zwei einander benachbarte Verbindungsbereiche (4,5) mit unterschiedlich ausgebildeten Elektroschweisszonen (9,10) aufweist, wobei die Elektroschweissmuffe (3,3') mittels Elektroschweissverfahren einerseits mit einer Rohrleitung L und andrerseits mit einem Rohrleitungsbauteil (2) verbindbar ausgebildet ist, wobei der erste Verbindungsbereich (4) mit einem Rohrleitungsbauteil (2) verbindbar ausgebildet ist, und die Elektroschweisszone (9) des ersten Verbindungsbereiches (4) ein in einem Induktionsfeld erhitzbaren Metallkörper aus einer spezifisch gefertigten Metallegierung aufweist, und wobei die Elektroschweisszone (9) des ersten Verbindungsbereiches (4) kürzer als die Etektroschweisszone (10) des zweiten Verbindungsbereiches (5) ausgebildet ist und wobei der zweite Verbindungsbereich (5) mit der Rohrleitung L verbindbar ausgebildet ist, wobei die längere Elektroschweisszone (10) des zweiten Verbindungsbereiches (5) eine durch elektrischen Strom erhitzbare Wicklung (15) mit Widerstandsheizdraht (16) und Steckverbindungsanordnungen zur Verbindung einer Heizdrahtwicklung (10) mit einer externen elektrischen Stromquelle (6,13) aufweist und wobei der zweite Verbindungsbereich (5) Schmelzindikatoren (7,14) aufweist, **dadurch gekennzeichnet, dass** die Elektroschweisszone (9) des ersten Verbindungsbereiches (4) eine Heizwicklung aufweist, die keine sichtbaren elektrischen Anschlüssen aufweist.

2. Elektroschweissmuffe nach dem Anspruch 1, **dadurch gekennzeichnet, dass** der erste Verbindungsbereich (4) eine Kaltzone (11) aufweist, die kürzer ausgebildet ist als die Kaltzone (12b) des zweiten Verbindungsbereiches (5).

3. Elektroschweissmuffe nach dem Anspruch 1 oder 2, **dadurch gekennzeichnet, dass** die Wicklung im ersten Verbindungsbereich (4) enger gewickelt ausgebildet ist als die Wicklung (15) im zweiten Verbindungsbereich (5).

4. Elektroschweissmuffe nach mindestens einem der Ansprüche 1 bis 3, **dadurch gekennzeichnet, dass** zwischen dem ersten Verbindungsbereich (4) und dem zweiten Verbindungsbereich (5) einen Absatz (8) als Anschlag für die Rohrleitung L ausgebildet ist.

5. Elektroschweissmuffe nach mindestens einem der Ansprüche 1 bis 4, **dadurch gekennzeichnet, dass** die Schweisszone (10) des zweiten Verbindungsbereiches (5) einen Schmelzindikator (7,14) zur Überwachung des Schmelzprozesses aufweist.

6. Elektroschweissmuffe nach mindestens einem der Ansprüche 1 bis 5, **dadurch gekennzeichnet, dass** die Wicklung (15) aus zwei paarweise nebeneinander gewickelte Einzeldrähte ausgebildet ist, wobei die Einzeldrähte an einem Ende der Wicklung miteinander verbunden sind.

7. Elektroschweissmuffe nach mindestens einem der Ansprüche 1 bis 6, **dadurch gekennzeichnet, dass** der Innendurchmesser des zweiten Verbindungsbereiches (5) grösser als 100 mm ist.

8. Verwendung einer Elektroschweissmuffe nach mindestens einem der Ansprüche 1 bis 7, **dadurch gekennzeichnet, dass** die Elektroschweissmuffe zur Verbindung mit Rohrleitungen und / oder Rohrleitungsbauteilen mit beliebigen Aussendurchmessern grösser als 100 mm ausgelegt ist.

## Claims

1. Electrofusion fitting (3, 3') for thermoplastic pipeline connections, the electrofusion fitting (3, 3') having two adjacent connecting regions (4, 5) with differently formed electrofusion zones (9, 10), the electrofusion fitting (3, 3') being formed by means of an electrofusion process in such a way that it can be connected on the one hand to a pipeline L and on the other hand to a pipeline component (2), the first connecting region (4) being formed such that it can be connected to a pipeline component (2), and the electrofusion zone (9) of the first connecting region (4) having a metal body which can be heated in an induction field and is made of a specifically produced metal alloy, and the electrofusion zone (9) of the first connecting region (4) being made shorter than the electrofusion zone (10) of the second connecting region (5), and the second connecting region (5) being formed such that it can be connected to the pipeline L, the longer electrofusion zone (10) of the second connecting region (5) having a winding (15), which can be heated by electric current and has a resistance heating wire (16), and plug-in connection arrangements (6, 13) for connecting a heating wire winding (10) to an external electric current source, and the second connecting region (5) having fusion indicators (7, 14), **characterized in that** the electrofusion zone (9) of the first connecting region (4) has a heating winding which does not have any visible electrical connections.

2. Electrofusion fitting according to Claim 1, **characterized in that** the first connecting region (4) has a cold zone (11), which is made shorter than the cold zone (12b) of the second connecting region (5).

3. Electrofusion fitting according to Claim 1 or 2, **characterized in that** the winding in the first connecting region (4) is formed such that it is wound more tightly than the winding (15) in the second connecting region (5).

4. Electrofusion fitting according to at least one of Claims 1 to 3, **characterized in that** a smoulder (8) is formed between the first connecting region (4) and the second connecting region (5) as a stop for the pipeline L.

5. Electrofusion fitting according to at least one of Claims 1 to 4, **characterized in that** the fusion zone (10) of the second connecting region (5) has a fusion indicator (7, 14) for monitoring the fusion process.

6. Electrofusion fitting according to at least one of Claims 1 to 5, **characterized in that** the winding (15) is formed by two individual wires wound in pairs next to one another, the individual wires being connected to one another at one end of the winding.

7. Electrofusion fitting according to at least one of Claims 1 to 6, **characterized in that** the inside diameter of the second connecting region (5) is greater than 100 mm.

8. Use of an electrofusion fitting according to at least one of Claims 1 to 7, **characterized in that** the electrofusion fitting is designed for connecting to pipelines and/or pipeline components with any desired outside diameters greater than 100 mm.

## Revendications

1. Raccord électrosoudable (3, 3') pour raccordements de canalisations en matières thermoplastiques, le raccord électrosoudable (3, 3') comportant deux sections de raccordement (4, 5) voisines l'une de l'autre ayant des zones d'électrosoudage (9, 10) de configurations différentes, le raccord d'électrosoudage (3, 3') étant configuré pour être raccordé d'une part à une canalisation L et d'autre part à un composant de canalisation (2) au moyen d'un procédé d'électrosoudage, la première section de raccordement (4) étant configurée de façon à pouvoir être raccordée à un composant de canalisation (2) et la zone d'électrosoudage (9) de la première section de raccordement (4) comportant un corps métallique constitué d'un alliage métallique spécifique pouvant être chauffé dans un champ d'induction, et la zone d'électrosoudage (9) de la première section de raccordement (4) étant configurée de façon à être plus courte que la zone d'électrosoudage (10) de la seconde section de raccordement (5), et la seconde section de raccordement (5) étant configurée de façon à pouvoir être raccordée à la canalisation L, la zone d'électrosoudage (10) plus longue de la seconde section de raccordement (5) comportant un enroulement (15) pouvant être chauffé par un courant électrique au moyen d'un fil chauffant résistif (16) et des dispositifs de connexion de bornes (6, 13) pour la connexion d'un enroulement de fil chauffant (10) à une source de courant électrique externe, et la seconde section de raccordement (5) comportant des indicateurs de fusion (7, 14), **caractérisé en ce que** la zone d'électrosoudage (9) de la première section de raccordement (4) comporte un enroulement chauffant qui ne comporte pas de connexions électriques apparentes.

2. Raccord électrosoudable selon la revendication 1, **caractérisé en ce que** la première section de raccordement (4) comporte une zone froide (11) qui est configurée de façon à être plus courte que la zone froide (12b) de la seconde section de raccordement (5).

3. Raccord électrosoudable selon la revendication 1 ou 2, **caractérisé en ce que** l'enroulement présent dans la première section de raccordement (4) est configuré pour être enroulé de manière plus serrée que l'enroulement (15) présent dans la seconde section de raccordement (5).

4. Raccord électrosoudable selon au moins l'une des revendications 1 à 3, **caractérisé en ce qu'**un épaulement (8) est réalisé en tant que butée destinée à la canalisation L entre la première section de raccordement (4) et la seconde section de raccordement (5).

5. Raccord électrosoudable selon au moins l'une des revendication 1 à 4, **caractérisé en ce que** la zone de soudage (10) de la seconde section de raccordement (5) comporte un indicateur de fusion (7, 14) destiné à la surveillance du processus de fusion.

6. Raccord électrosoudable selon au moins l'une des revendications 1 à 5, **caractérisé en ce que** l'enroulement (15) est réalisé à partir de deux fils individuels enroulés côte à côte sous forme d'une paire, les fils individuels étant raccordés l'un à l'autre à une extrémité de l'enroulement.

7. Raccord électrosoudable selon au moins l'une des revendications 1 à 6, **caractérisé en ce que** le diamètre intérieur de la seconde section de raccordement (5) est supérieur à 100 mm.

8. Utilisation d'un raccord électrosoudable selon au moins l'une des revendications 1 à 7, **caractérisée en ce que** le raccord électrosoudable est conçu pour un raccordement à des canalisations et/ou à des composants de canalisations ayant des diamètres extérieurs quelconques supérieurs à 100 mm.
